# EUROPÄISCHE PATENTSCHRIFT

(11) **EP 3 513 622 B1**
(45) Veröffentlichungstag und Bekanntmachung des Hinweises auf die Patenterteilung: **02.09.2020**
(21) Anmeldenummer: 17742226.8
(22) Anmeldetag: 19.07.2017
(51) Int. Cl.: H05B 3/34, A47J 36/24, H05B 3/30, H05B 3/28, H05B 3/32

(54) **KASSETTE AUS KUNSTSTOFF MIT HEIZEINRICHTUNG**
PLASTIC MADE CASSETTE WITH HEATING DEVICE
CASSETTE EN MATIÈRE PLASTIQUE AVEC DISPOSITIF DE CHAUFFAGE

(30) Priorität: 13.09.2016 DE 102016217375
(43) Veröffentlichungstag der Anmeldung: 24.07.2019
(73) Patentinhaber: Robert Bosch GmbH, 70442 Stuttgart (DE)
(72) Erfinder: BARRON, Dan, 8200 Schaffhausen (CH)
(74) Vertreter: Daub, Thomas
(86) Internationale Anmeldenummer: PCT/EP2017/068205
(87) Internationale Veröffentlichungsnummer: WO 2018/050328

(56) Entgegenhaltungen:
- DE-A1- 19 807 388
- US-A1- 2002 092 838
- US-A1- 2002 092 879

## Beschreibung

### Technisches Gebiet

Die vorliegende Erfindung betrifft eine Kassette mit Heizeinrichtung aus Kunststoff mit wenigstens zwei lösbar verbindbaren Kassettenschalen, wobei in der Kassette ein Beutel, insbesondere ein Beutel mit einem Nahrungsmittel, aufgenommen werden kann, wobei die beiden Kassettenschalen verbindbar, bevorzugt gelenkig miteinander verbunden sind.

Verschiedene flüssige oder halbflüssige Lebensmittelprodukte, teilweise mit beigemischten festen Bestandteilen, müssen vor der dosierten Abgabe erwärmt werden und während der Abgabe auf einer vorgegebenen Temperatur gehalten werden. Hierbei interessieren vorliegend nur Lösungen, bei denen diese Lebensmittel in flexiblen Beuteln angeliefert werden und in einer entsprechenden Spendervorrichtung erwärmt werden. Hierbei wird das Lebensmittel im flexiblen Beutel selbst erwärmt. Die flexiblen Beutel werden entweder in Kammern mit heizbaren Wänden eingesetzt oder aber in Kassetten eingefügt und in diesen Kassetten erwärmt.

Vielfach wurden die flexiblen Beutel, die aus Kunststofffolien gefertigt werden, vor dem Einsetzen in einer entsprechenden Dosiervorrichtung bzw. vor dem Einsetzen in Kassetten, die in diese Dosiervorrichtungen auswechselbar eingesetzt werden, vorgeheizt. Die vorliegende Erfindung soll diesen Vorheizprozess ausserhalb einer Dosiervorrichtung vermeiden.

Bei den bisher bekannten Systemen weisen diese Dosiervorrichtungen Abteile auf, in die entweder Kassetten eingeschoben werden können, in denen die entsprechenden gefüllten und zu beheizenden Beutel eingelegt sind, oder bei denen die entsprechenden Beutel direkt in diese Abteile untergebracht werden. Bei allen Lösungen werden jeweils die beiden einander gegenüberliegenden Wände entweder einer Abteilung oder die beiden gegenüber liegenden beheizten Wände durch eine Bodenschale und eine Deckelschale einer Kassette gebildet. Entsprechend sind solche Kassetten bisher bevorzugterweise aus Metall oder zumindest zum grossen Teil aus Metall. Die Beheizung erfolgt gemäss dem Stand der Technik meist dadurch, dass in diesen Wänden Kanäle eingeformt sind, durch die entsprechend geheiztes Wasser umgewälzt wird oder heisse Luft hindurchgeblasen wird. Eine dritte Variante sieht vor, dass in diesen Kanälen entsprechende Heizdrähte verlegt werden, um entsprechend diese plattenförmigen Wände zu heizen. Bei all diesen Varianten wird die gesamte Kassette auf relativ hohe Temperaturen geheizt und dabei ein grosses Volumen an Material geheizt, welches dann auf den zwischen diesen Wänden gehaltenen Beutel und dessen Inhalt wirkt. Dies ist ineffizient, unökonomisch und unökologisch, da viel unnötige Energie verwendet wird. Fernen ist aber auch entsprechend dem grossen Volumen an Material, das auf eine erforderliche Temperatur aufgewärmt werden muss, der gesamte Aufheizprozess sehr langsam.

Wenn der gesamte Beutel entleert ist und in die entsprechende Kassette ein neuer gefüllter Beutel eingesetzt werden soll, ist die gesamte Kassette entsprechend sehr heiss und entsprechend sind leichtere Verbrennungen beim Bedienungspersonal relativ häufig auftretend.

Weiterer gattungsgemäßer Stand der Technik ist außerdem aus US 2002/092879 A1, US 2002/092838 A1 bzw. DE 19807388 A1 bekannt.

Es ist die Aufgabe der vorliegenden Erfindung eine heizbare Kassette der eingangs genannten Art so zu verbessern, dass die erwähnten Probleme reduziert werden. Diese Aufgabe löst eine thermisch heizbare Kassette aus Kunststoff der eingangs genannten Art, die sich dadurch auszeichnet, dass in jeder Kassettenschale eine Aufnahmenvertiefung eingeformt ist, die sich jeweils über wenigstens die halbe Breite und mindestens über eine halbe Höhe der entsprechenden Kassettenschale erstreckt, und wobei in der Aufnahmevertiefung eine Wärmeleitplatte lagegesichert Aufnahme findet, die aus einer metallischen Platte besteht, auf deren im montierten Zustand, dem Beutelaufnahmeraum abgelegenen Seite, ein Heizelement appliziert ist, und dass zwischen der Wärmeleitplatte und der jeweiligen Kassettenschale im Bereich der Aufnahmevertiefung ein thermisch isolierender Luftspalt definiert ist. Dieser thermisch isolierende Luftspalt muss, damit dieser eine entsprechende Wirkung erzielt, eine gewisse Grösse aufweisen. Bevorzugterweise wird man den Luftspalt gleich gross oder grösser als die Dicke der Wärmeleitplatte gestalten. Geht man davon aus, dass üblicherweise die Wärmeplätte 1 bis 2 mm aufweist, so sollte somit der Luftspalt dieses Mass mindestens aufweisen, bevorzugterweise aber etwa 1,5 bis 4 mm betragen.

Um einen solchen genügenden Luftspalt zu erzielen, ohne die Baugrösse der Kassette und damit auch die Baugrösse einer Spendervorrichtung, in der solche Kassetten Aufnahme finden, zu ermöglichen, ist es erforderlich, dass das Heizelement insgesamt möglichst flach gestaltet werden kann. Dies erzielt man bevorzugterweise dadurch, dass man das Heizelement, welches auf der Wärmeleitplatte appliziert ist, aus einer flexiblen Thermofolie mit ätztechnisch gebildeter Heizleiterbahnen fertigt, wobei diese Thermofolie in einer Hülle aus zwei miteinander verbundenen, hitzebeständigen Kunststofffolien gehalten ist. Da solche hitzebeständigen Kunststofffolien auch elektrisch isolierend sind, dient dies der Sicherheit, dass sogar im Falle, dass Feuchtigkeit in den Bereich des Heizelementes gelangt, die elektrisch leitenden Elemente geschützt sind. Hinzu kommt, dass ein solches Heizelement ausserordentlich dünn ist und sogar inklusive der Hülle aus hitzebeständiger Kunststofffolie insgesamt lediglich einige Zehntel mm Dicke aufweist. Bevorzugterweise wird man auf einer solchen Thermofolie gleichzeitig auch ein temperaturüberwachendes Element anbringen.

Besonders vorteilhaft ist es, wenn die Aufnahmevertiefungen in den beiden Kassettenschalen einen umlaufenden, nach innen ragenden Auflageabsatz aufweisen, der um mindestens der Dicke der hierauf aufliegenden Wärmeleitplatte entsprechend nach unten zur entsprechenden Kassettenschalenwand in der Aufnahmevertiefung hin versetzt ist. Hierdurch kann eine absolut fluchtende Ebene gebildet werden, bestehend aus der Wärmeleitplatte einerseits und andererseits aus der Kassettenschalenwand oberhalb in dieser Aufnahmevertiefung, so dass eine gummielastische beschichtete Entleerungsrolle widerstandsfrei darüber hinwegzurollen vermag.

Bei dieser Ausgestaltung ist es zudem sinnvoll, wenn ein gummielastisches Dichtband die Wärmeplatte umgibt und den Beutelaufnahmeraum gegenüber der Aufnahmevertiefung abdichtet. Hierdurch wird zudem vermieden, dass die Wärmeleitplatte direkt mit der Kassettenwand in wärmeleitender Verbindung steht, so dass die Kassette selbst nur geringfügig durch Abwärmestrahlung erwärmt wird. Dies garantiert, dass die erfindungsgemässe, thermisch heizbare Kassette sich nur gering erwärmt sondern zudem beim Herausnehmen der Kassette und dem Einsetzen eines neuen gefüllten Beutels eine Verbrennungsgefahr praktisch vollständig vermieden ist.

Hinzu kommt, dass die Wärmeleitplatte sich lediglich über etwas mehr als die untere Hälfte der Kassette hinweg erstreckt und nur mit dem Schlauchbeutel in direktem Kontakt steht. Der obere Bereich, in dem der Beutel auswechselbar gehalten ist und wo die eigentliche Manipulation stattfindet, ist somit relativ weit von der Wärmeleitplatte entfernt und hier in diesem Bereich ist die Gefahr einer Verbrennung nicht gegeben.

In der anliegenden Zeichnung ist ein bevorzugtes Ausführungsbeispiel des Erfindungsgegenstandes dargestellt und anhand der nachfolgenden Beschreibung erläutert.
- Fig. 1: zeigt eine perspektivische Gesamtansicht einer vollständig geöffneten, beheizbaren Kassette im montierten Zustand unter Weglassung des aufzuheizenden Beutels;
- Fig. 2: zeigt eine Explosionszeichnung einer Kassettenschale mit den verschiedenen hierin angebrachten Bauteilen;
- Fig. 3: zeigt einen Teilschnitt durch eine Kassettenschale im Scharnier-entfernteren Bereich in einem Vertikalschnitt zur Erläuterung der Halterung einer Wärmeleitplatte in einer der beiden Kassettenschalen, während
- Fig. 4: eine perspektivische Teilansicht einer Kassettenschale im unteren Bereich mit eingesetztem Leitungsdurchführungsstecker zeigt.

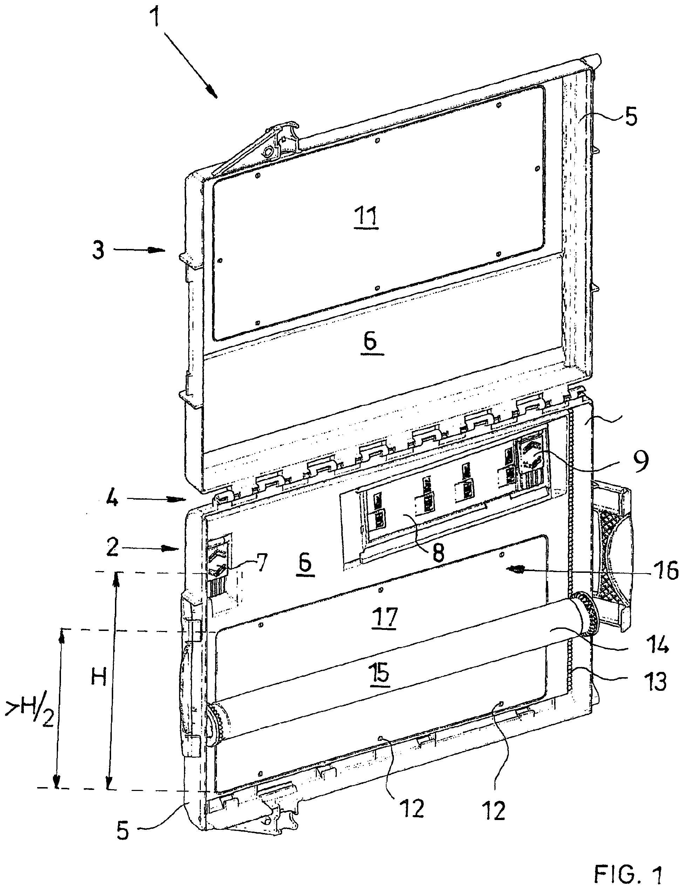

In der Fig. 1 erkennt man die fertig zusammengebaute heizbare Kassette 1 im vollständig geöffneten Zustand. Eine solche Kassette besteht aus zwei Kassettenschalen, 2, 3, wobei die in der Figur untere Kassettenschale die Kassettenbodenschale 2 bildet und die in der Zeichnung oben dargestellte Kassettenschale die Kassettendeckelschale 3 zeigt. Die beiden Kassettenschalen 2, 3 sind über ein Scharnier 4 miteinander verbunden. Prinzipiell können die einzelnen Kassettenschalen auch ohne Scharnier miteinander verbunden sein, indem sie einfach zusammensteckbar sind oder andersartig miteinander verbunden sein können. Für eine einfache Handhabung der heizbaren Kassette eignet sich jedoch eine Scharnierverbindung zwischen den beiden Kassettenschalen besonders. Jede Kassettenschale 2, 3 weist im scharniernahen Bereich einen flachen Wandabschnitt 6 auf, der Teil der Auflagefläche eines Beutelaufnahmeraumes R bildet. In der Kassettenbodenschale 2 sind Mittel zur aufhängbaren Halterung eines zu entleerenden Schlauchbeutels gezeigt. Diese Mittel bestehen aus einer fest angeordneten Beutelklemme 7 und einer zum Verlauf des Scharnieres 4 leicht geneigt verlaufenden Klemmschiene 8, auf der eine verstellbare Beutelklemme 9 an verschiedenen Stellen anbringbar ist.

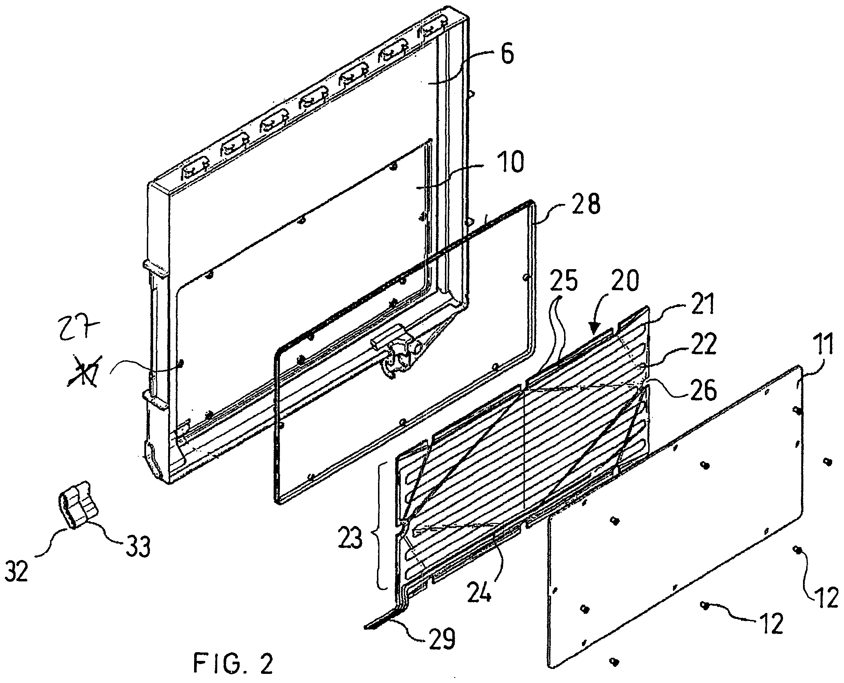

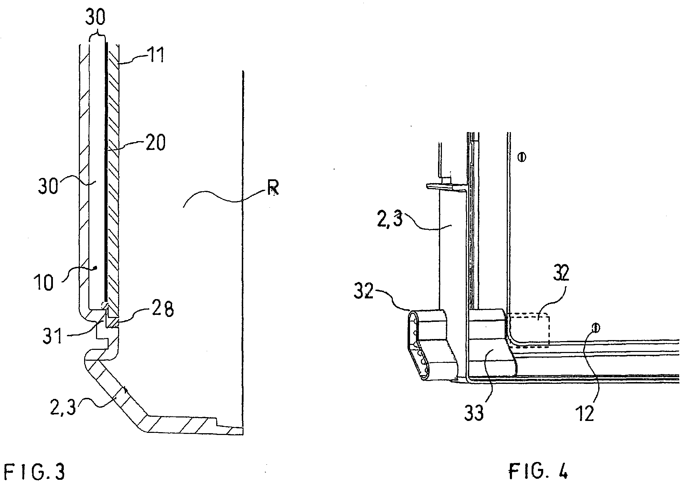

Jede Kassettenschale 2, 3 besitzt eine Aufnahmevertiefung 10, die hier nur mittelbar erkennbar ist, da die Aufnahmevertiefung 10 durch eine Wärmeleitplatte 11 abgedeckt ist. In dieser Position wird die Wärmeleitplatte 11 mittels Senkkopfschrauben 12 mit dem flachen Wandabschnitt 6 des Beutelaufnahmeraumes R fluchtend gehalten und bildet so eine perfekte Abrollebene. Diese fluchtende Ausrichtung der Wärmeleitplatte 11 mit dem flachen Wandabschnitt 6 ist erforderlich, wenn die Kassette mit einer Entleerungsrolle ausgerüstet ist. Eine solche Entleerungsrolle läuft auf zwei parallelen Zahnstangen 13, die in der Kassettenbodenschale 2 eingeformt sind. Die Entleerungsrolle 14, die sich lediglich unter Einwirkung der Schwerkraft in der Kassette nach unten bewegt, besitzt eine gummielastische Beschichtung 15, bevorzugterweise aus einem geschäumten Polyurethan. In der Kassettendeckelschale 3 ist deutlich erkennbar, wie der flache Wandabschnitt 6 des Beutelaufnahmeraumes R zusammen mit der Oberfläche der Wärmeleitplatte 11 insgesamt eine plane Beutelführungsfläche 16 bildet. Der eigentliche Beutelaufnahmeraum R wird je hälftig von der Kassettenbodenschale 2 und der Kassettendeckelschale 3 gebildet. Dieser Beutelaufnahmeraum R ist am deutlichsten erkennbar in den Figuren 2 und 3. Wobei hier selbstverständlich immer nur der Beutelaufnahmeraum hälftig erkennbar ist.

In der Figur 2 ist in einer Explosionszeichnung eine Kassettendeckelschale 3 sowie die darin untergebrachten Bauteile einzeln erkennbar dargestellt. Im zusammengesetzten Zustand erkennt man lediglich die in der Aufnahmevertiefung 10 liegende Wärmeleitplatte 11. Diese Wärmeleitplatte 11 besteht aus einer Metallplatte mit guten Wärmeleiteigenschaften, hierzu eignet sich insbesondere eine Aluminiumplatte, da einerseits diese nicht korrodiert und andererseits sicherstellt, dass die gesamte heizbare Kassette nicht unnötig schwer wird. Die Wärmeleitplatte 11 besitzt an der im montierten Zustand zum Beutelaufnahmeraum R hin gerichteten Fläche eine Beschichtung 17 aus hochtemperaturfestem Kunststoff. Diese Beschichtung vermeidet es, dass der zu erwärmende Kunststoffbeutel mit dem dosiert abzugebenden Inhalt an der Wärmeleitplatte 11 anzukleben vermag. Dies wäre denkbar, weil verschiedene Kunststoffbeutel, die heute auf dem Markt verwendet werden, eine relativ tiefe Erweichungstemperatur um ca. 70 - 100°C aufweisen. Besonders geeignet ist entsprechend eine Wärmeleitplatte 11 mit einer TPFE-Beschichtung.

Das eigentliche Heizelement ist insgesamt mit 20 bezeichnet. Es umfasst eine flexible Thermofolie 21, auf der ätztechnisch gebildete Heizleiterbahnen 22 angeordnet sind. Im hier dargestellten Beispiel verlaufen diese Heizleiterbahnen 22 mäandernd über die gesamte Fläche der flexiblen Thermofolie 21. Diese Heizleiterbahnen 22 definieren eine Heizzone 23. Im hier dargestellten Beispiel ist lediglich eine einzige Heizzone 23, die sich über die gesamte flexible Thermofolie hinweg erstreckt, angebracht. Es kann aber bevorzugterweise auch diese Heizzone in drei verschiedene Heizzonen unterteilt sein. Hierbei wird man dann die in der Figur 2 dargestellte einzige Heizzone 23 in drei getrennte, mindestens annähernd lückenlos übereinander über die gesamte Breite der Thermofolie 21 sich erstreckende Heizzonen gliedern. Eine solche Lösung macht selbstverständlich nur dann Sinn, wenn auch die Wärmeleitplatte in thermisch getrennte Teilplatten unterteilt ist. So lässt sich jede einzelne Heizzone 23 thermisch überwacht zu- oder wegschalten. Ist beispielsweise ein Beutel im Beutelaufnahmeraum bereits zur Hälfte geleert, so macht es wenig Sinn, den oberen geleerten Bereich des Beutels weiterhin zu beheizen.

Auf der flexiblen Thermofolie 21 kann auch ein Thermistor 24 angebracht sein. Mittels einem solchen Thermistor 24 kann die Temperatur der Wärmeleitplatte überwacht werden. Ein solcher Thermistor 24 kann so geschaltet sein, dass er bei Erreichen einer bestimmten Temperatur die Heizleiterbahn 22 abschaltet und nach Unterschreitung einer zweiten Temperatur wieder zuschaltet. Damit ist sichergestellt, dass das zu erwärmende Produkt im zu entleerenden Beutel im gewünschten Temperaturbereich sich befindet.

Die äusserst dünne und flexible Thermofolie 21 ist in einer etuiartigen Hülle 25 untergebracht. Diese Hülle 25 wird dann sicherheitshalber allseitig verschlossen, beispielsweise durch Versiegelung, und diese etuiartige Hülle 25 wird schliesslich auf der Wärmeleitplatte vollflächig haftend angeklebt. Hierbei sind in der etuiartigen Hülle 25 randständige Ausnehmungen 26 vorhanden, die eine Durchführung der Senkkopfschrauben 12 durch die Wärmeleitplatte 11, bis hinein in entsprechende Sacklöcher in der Kassettendeckelschale 3, erlauben. Diese Sacklöcher sind in der Figur 2 ersichtlich und mit 27 bezeichnet. Die Wärmeleitplatten 11 mit der darauf applizierten flexiblen Thermofolie in der etuiartigen Hülle 25 werden dann umfasst von einer gummielastischen Dichtung 28, die wiederum entsprechende Ösen 29 besitzt, durch die die bereits erwähnten Senkkopfschrauben 12 hindurch geführt sind. In der hier in Fig. 2 für sich dargestellten Kassettendeckelschale 3 ist die Aufnahmevertiefung 10 offen ersichtlich. In einer Vormontage wird zuerst die Wärmeleitplatte 11 mit einem Antihaftbelag 17 beschichtet, danach die flexible Thermofolie 21 mit den elektrischen Anschlüssen 29 in die etuiartige Hülle 25 eingeschoben, die elektrischen Leitungen 29 hier hinaus geführt und danach dieses versiegelte Etui vollflächig auf die dem Antihaftbelag 17 abgelegenen Seite der Wärmeleitplatte 11 aufgeklebt. Schliesslich wird eine die Wärmeleitplatte umgreifende gummielastische Dichtung 28 aufgesetzt und lagestabil in die Aufnahmevertiefung 10 eingelegt, wobei Mittel vorhanden sind, die die Wärmeleitplatte inklusive dem Heizelement 20 so in der Aufnahmevertiefung 10 halten, dass die gesamte Wärmeleitplatte 11 mit dem Heizelement 20 so in der Kassette gehalten ist, dass diese keine direkte Berührung mit der Kassette aufweist. Lediglich die Randbereiche der Wärmeleitplatte 11 haben einen indirekten Kontakt mit der entsprechenden Kassettenschale 2, 3 über der thermisch isolierenden, gummielastischen Dichtung 28. Entsprechend verbleibt zwischen der Wärmeleitplatte 11 und der Kassettenschale 2, 3 in der Aufnahmevertiefung 10 zwischen der Wärmeleitplatte 11 und der Kassettenschale 2, 3 ein wärmeisolierender Luftspalt 30. Unter dem Luftspalt wird somit die Distanz zwischen der Wärmeleitplatte 11 und der Wand der entsprechenden Kassettenschale im Bereich der Aufnahmevertiefung 10 verstanden. Dieser Luftspalt ist bevorzugt insgesamt gleich gross oder grösser als die Dicke der Wärmeleitplatte 11 inklusive dem Heizelement 20. Geht man davon aus, dass die Wärmeleitplatte bevorzugterweise eine Dicke von 1 bis 2,5 mm aufweist, so kann man beim Luftspalt von einer Grösse von mindestens 1 bis bevorzugterweise etwa 5 mm ausgehen. Die Wärmeleitplatte 11 muss folglich in der Höhe korrekt aufliegend gehalten werden in der Auflagevertiefung der Kassettenschale 2, 3. Dies kann, wie die Lösung in der Figur 2 zeigt, in Form zylindrischer Erhebungen sein, in der die erwähnten Sacklöcher angeordnet sind zur Schraubverbindung der Wärmeleitplatte 11 mittels den Senkkopfschrauben 12 mit der entsprechenden Kassettenschale 2, 3.

Alternativ kann dies aber auch so realisiert werden, dass in der Aufnahmevertiefung 10 der jeweiligen Kassettenschale 2 oder 3 ein umlaufender, nach innen ragender Auflageabsatz 31 vorhanden ist. Dieser umlaufende Auflageabsatz 31 ist um die Dicke der Wärmeleitplatte 11 inklusive dem Heizelement 20 gegenüber jenem flachen Wandabschnitt 6 des Beutelaufnahmeraumes R in die Aufnahmevertiefung hinein versetzt, wie dies die Figur 3 deutlich zeigt. Auf diese Weise bildet dann die dem Beutelaufnahmeraum R zugerichtete beschichtete Oberfläche der Wärmeleitplatte 11 eine insgesamt fluchtende Auflagefläche für den entsprechend in der Kassette aufgenommenen gefüllten Beutel, der dosiert entleert werden soll, bei Beibehaltung einer vorgegebenen Temperatur. Diese Temperatur beträgt bevorzugterweise zwischen 60 und 80°C.

Neben der erwähnten Möglichkeit eines Thermistors 24 kann selbstverständlich auch eine andere Form eines Temperaturüberwachungselementes mit der Thermofolie wirkverbunden sein. Dies können ein oder mehrere Temperatursensoren sein, mittels denen die Wärmeleitplatte in einen vorgegebenen Temperaturbereich erwärmt und in diesem gewünschten Temperaturbereich gehalten werden kann. Nochmals andere Temperaturüberwachungselemente kommen selbstverständlich auch in Frage. Der Fachmann wird die für jeden entsprechenden Temperaturbereich sinnvolle Lösung wählen.

Normalerweise wird man an den aus der etuiartigen Hülle hinausgeführten elektrischen Anschlüssen 29 einen entsprechenden Stecker anbringen. Dieser Stecker 32, wie in der Fig. 4 dargestellt, lässt sich dann in einer Steckerdurchführungshülse, die in den Kassettenschalen 2, 3 eingeformt oder gesteckt sind in entsprechenden Durchführungsöffnungen einschieben und mit einem entsprechenden Gegenstecker von der anderen Seite her im Bereich der Steckerdurchführungshülse 33 verbinden. Von dort aus lassen sich die Leitungen zur entsprechenden Speisung-, Regelungs- und Überwachungseinheit führen. Diese Teile sind jedoch nicht Teile der Kassette, sondern der Dosiervorrichtung, in der die heizbare Kassette gehalten ist. Die elektrischen Anschlüsse 29 wird man bevorzugterweise gebündelt in einem Flachkabel aus dem Bereich des Luftspaltes in den Bereich der Steckerdurchführungshülse 33 führen.

### Bezugszeichenliste:

- 1: heizbare Kassette
- 2: Kassettenbodenschale
- 3: Kassettendeckelschale
- 4: Scharnier
- 5: Umlaufender Rand
- 6: Flacher Wandabschnitt des Beuteaufnahmeraumes
- 7: Beutelklemme, fest
- 8: Klemmschiene
- 9: Beutelklemme, verstellbar
- 10: Aufnahmevertiefung
- 11: Wärmeleitplatte
- 12: Senkkopfschraube
- 13: Zahnstangen
- 14: Entleerungsrolle
- 15: Gummielastische Beschichtung
- 16: Beutelführungsfläche
- R: Beutelaufnahmeraum
- 17: PTFE-Beschichtung (Antihaft-Beschichtung)
- 20: Heizelement
- 21: flexible Thermofolie
- 22: ätztechnisch gebildete Heizleiterbahnen
- 23: Heizzone
- 24: Thermistor
- 25: etuiartige Hülle
- 26: randständige Ausnehmungen
- 27: Sacklöcher in Kassettenschale 2, 3
- 28: gummielastische Dichtung
- 29: elektrischer Anschluss
- 30: Luftspalt
- 31: Umlaufender Auflageabsatz
- 32: Stecker
- 33: Steckerdurchführungshülse

## Patentansprüche

1. Kassette (1) aus Kunststoff mit Heizvorrichtung mit wenigstens zwei lösbar verbindbaren Kassettenschalen (2, 3), wobei in der Kassette (1) ein Beutel, insbesondere ein Beutel mit einem Nahrungsmittel, aufgenommen werden kann, wobei die beiden Kassettenschalen (2, 3) verbindbar, bevorzugt gelenkig miteinander verbindbar sind, **dadurch gekennzeichnet, dass** in jeder Kassettenschale (2, 3) eine Aufnahmevertiefung (10) eingeformt ist, die jeweils sich über wenigstens die halbe Breite und mindestens über eine halbe Höhe (H) der entsprechenden Kassettenschale (2, 3) erstreckt, und wobei in der Aufnahmevertiefung eine Wärmeleitplatte (11) lagegesichert angeordnet ist, die aus einer metallischen Platte besteht, auf deren im montierten Zustand dem Beutelaufnahmeraum abgelegenen Seite, ein Heizelement (20) appliziert ist, und dass zwischen der Wärmeleitplatte (11) und der jeweiligen Kassettenschale (2, 3) im Bereich der Aufnahmevertiefung (10) ein thermisch isolierender Luftspalt (30) definiert ist.

2. Kassette nach Anspruch 1, **dadurch gekennzeichnet, dass** der Luftspalt (30) gleich gross oder grösser als die Dicke der Wärmeleitplatte (11) ist.

3. Kassette nach Anspruch 1, **dadurch gekennzeichnet, dass** das Heizelement (20), welches auf der Wärmeleitplatte (11) appliziert ist, aus einer flexiblen Thermofolie (21) mit bevorzugt ätztechnisch gebildeten Heizleiterbahnen (22) besteht, wobei diese Thermofolie (21) in einer etuiartigen Hülle (25) aus zwei untereinander verbundenen, hitzebeständigen Kunststofffolien gehalten ist.

4. Kassette nach Anspruch 3, **dadurch gekennzeichnet, dass** mit der Thermofolie (21) ein Temperaturüberwachungselement verbunden ist.

5. Kassette nach Anspruch 4, **dadurch gekennzeichnet, dass** das Temperaturüberwachungselement ein Thermistor (24) oder ein thermischer Schalter ist.

6. Kassette nach mindestens einem der Ansprüche 3 - 5, **dadurch gekennzeichnet, dass** alle elektrischen Verbindungen (29) von und zum Heizelement (20) gebündelt in einem Flachkabel im Luftspaltbereich (30) geführt sind und mittels einer die Kassettenwandung durchsetzenden Steckverbindung (32, 33) aus der heizbaren Kassette geführt sind.

7. Kassette nach Anspruch 6, **dadurch gekennzeichnet, dass** die die Kassettenwandung durchsetzende Steckverbindung integral spritzgusstechnisch mit jeder Kassettenschale gefertigt ist.

8. Kassette nach Anspruch 1, **dadurch gekennzeichnet, dass** die Aufnahmevertiefungen (10) in den beiden Kassettenschalen (2, 3) einen umlaufenden, nach innen ragenden Auflageabsatz (31) aufweisen, der um mindestens die Dicke der hierauf aufliegenden Wärmeleitplatte (11) entsprechend nach unten hin zur Kassettenschalenwand in der Aufnahmevertiefung (10) hin versetzt ist.

9. Kassette nach Anspruch 1 oder 8, **dadurch gekennzeichnet, dass** eine gummielastische Dichtung (28) die Wärmeleitplatte (11) umgibt und den Beutelaufnahmeraum (R) gegenüber der Aufnahmevertiefung (10) abdichtet.

10. Kassette nach Anspruch 1, **dadurch gekennzeichnet, dass** in der heizbaren Kassette eine gummielastisch beschichtete (15) Entleerungsrolle (14) angeordnet ist, die unter Einwirkung der Schwerkraft auf einen bereits teilweise entleerten Beutel rollt und die darin liegenden Resten nach unten zur Entleerungsseite drückt, wobei die von der Entleerungsrolle bestrichene Fläche (16) der Kassettenschale (2, 3) und die die Aufnahmevertiefung (10) überdeckende Wärmeleitplatte (11) in der gleichen Ebene liegen.

11. Kassette nach Anspruch 1, **dadurch gekennzeichnet, dass** die Wärmeleitplatte (11) auf der im montierten Zustand zum Beutelaufnahmeraum (R) hin gerichteten Fläche mit einer hochtemperaturfesten Kunststoffbeschichtung (17) versehen ist, die ein Anhaften des zu erwärmenden Beutels aus Kunststoff vermeidet.

12. Kassette nach Anspruch 11, **dadurch gekennzeichnet, dass** die Beschichtung (17) der Wärmeleitplatte (11) aus TPFE besteht.

13. Kassette nach Anspruch 1 , **dadurch gekennzeichnet, dass**
die beiden Kassettenschalen (2, 3) scharniergelenkig (4) miteinander verbunden sind und die Aufnahmevertiefungen (10) darin von dem dem Scharnier entfernten Ende bis über der halben Höhe (H) der Kassettenschalen (2, 3) hinaus sich nach oben erstreckt und dass an einer Kassettenschale (2, 3) im scharniernahen Bereich Aufhängemittel (7, 9) für den zu erwärmenden Beutel vorhanden sind.

## Claims

1. Cassette (1) made of plastic,
with a heating device comprising at least two detachably connectable cassette shells (2, 3),
wherein a bag, in particular a bag with a nutrient, can be received in the cassette (1),
wherein the two cassette shells (2, 3) are connectable, in particular connectable in an articulated manner,
**characterised in that** in each cassette shell (2, 3) a receiving hollow (10) is moulded that respectively extends over at least half a width and over at least half a height (H) of the corresponding cassette shell (2, 3),
and wherein in the receiving hollow (10) a heat-conductive plate (11) is arranged in a position-secure manner, which is implemented of a metallic plate whose side that in the mounted state faces away from the bag accommodation space a heating element (20) is attached to,
and that a thermally insulating air gap (30) is defined between the heat-conductive plate (11) and the respective cassette shell (2, 3) in a proximity of the receiving hollow (10).

2. Cassette according to claim 1,
**characterised in that** the air gap (30) is the same size as or greater than the thickness of the heat-conductive plate (11).

3. Cassette according to claim 1,
**characterised in that** the heating element (20) attached to the heat-conductive plate (11) consists of a flexible thermofoil (21) comprising heat-conductive paths (22), which are preferably produced via etching technique,
the thermofoil (21) being held in a casing-like sheath (25) implemented of two interconnected heat-resistant plastic foils.

4. Cassette according to claim 3,
**characterised in that** a temperature monitoring element is connected with the thermofoil (21).

5. Cassette according to claim 4,
**characterised in that** the temperature monitoring element is a thermistor (24) or a thermal switch.

6. Cassette according to at least one of claims 3 to 5,
**characterised in that** all electrical connections (29) from and to the heating element (20) are guided as a bundle in a flat cable in a region of the air gap (30) and are guided out of the heatable cassette via a plug connection (32, 33) passing through the cassette wall.

7. Cassette according to claim 6,
**characterised in that** the plug connection passing through the cassette wall is produced integrally with each cassette shell by an injection-moulding technique.

8. Cassette according to claim 1,
**characterised in that** the receiving hollows (10) in the two cassette shells (2, 3) have a circulating, inwards-projecting support ledge (31) which is offset, by at least the thickness of the heat-conductive plate (11) that lies thereon, downwards toward the cassette shell wall in the receiving hollow (10).

9. Cassette according to claim 1 or claim 8,
**characterised in that** a rubber-elastic sealing (28) encompasses the heat-conductive plate (11) and seals the bag receiving space (R) against the receiving hollow (10).

10. Cassette according to claim 1,
**characterised in that** in the heatable cassette a rubber-elastic-coated (15) emptying roller (14) is arranged, which under the impact of gravity rolls onto a bag that is already partially emptied and pushes the remains situated therein downwards to the emptying side,
wherein the surface (16) of the cassette shell (2, 3) swiped by the depletion roller and the heat-conductive plate (11) covering the receiving hollow (10) are located in the same plane.

11. Cassette according to claim 1,
**characterised in that** the heat-conductive plate (11) is provided with a high-temperature resistant plastic coating (17) on the surface that is in the mounted state oriented towards the bag receiving space (R), the plastic coating (17) preventing an adherence of the plastic bag that is to be heated.

12. Cassette according to claim 11,
**characterised in that** the coating (17) of the heat-conductive plate (11) is made of PTFE.

13. Cassette according to claim 1,
**characterised in that** the two cassette shells (2, 3) are connected to one another via hinge-articulation (4) and the receiving hollows (10) extend therein, from an end that is remote from the hinge, upwards beyond half the height (H) of the cassette shells (2, 3) and that suspension means (7, 9) for the bag that is to be heated are present on a cassette shell (2, 3) in a proximity of the hinge.

## Revendications

1. Cassette (1) en matière plastique avec dispositif de chauffage,
avec au moins deux coques de cassette (2, 3) qui peuvent être raccordées d'une manière détachable,
où un sachet, en particulier un sachet avec un produit alimentaire, peut être reçu dans la casette (1),
les deux coques de cassette (2, 3) étant raccordables, en particulier raccordables en façon articulaire, l'une avec l'autre,
**caractérisée en ce que**
dans chacune des coques de cassette (2, 3) est moulue un enfoncement recevant (10) qui s'étend respectivement à travers d'au moins la moitié de la largeur et à travers d'au moins une moitié de la hauteur (H) de la coque de cassette correspondante (2, 3), et
où une plaque conductrice-chaleur (11) est disposée dans l'enfoncement recevant (10) sécurisée quant à sa position, ladite plaque conductrice-chaleur (11) consistante d'une plaque métallique, un élément de chauffage (20) étant appliqué sur un côté de la plaque métallique, qui est détourné de l'espace recevant-sachets en état monté,
et qu'un entrefer (30) thermiquement isolant est défini dans la zone de l'enfoncement recevant (10) entre la plaque conductrice-chaleur (11) et la coque de cassette respective (2, 3).

2. Cassette selon la revendication 1,
**caractérisé en ce que** l'entrefer (30) est d'une taille égale ou supérieure à l'épaisseur de la plaque conductrice-chaleur (11).

3. Cassette selon la revendication 1,
**caractérisé en ce que** l'élément de chauffage (20) appliqué sur la plaque conductrice-chaleur (11) est composé d'une feuille thermique flexible (21) avec des pistes conductrices-chaleur (22) formées de préférence par gravure en eau-forte, ladite feuille thermique (21) étant retenue dans une enveloppe en forme d'étui (25) produite de deux feuilles en matière plastique thermorésistantes qui sont raccordées l'une à l'autre.

4. Cassette selon la revendication 3,
**caractérisé en ce qu'**un élément surveillant-température est connecté à la feuille thermique (21).

5. Cassette selon la revendication 4,
**caractérisé en ce que** l'élément surveillant-température est un thermistor (24) ou un commutateur thermique.

6. Cassette selon au moins l'une des revendications 3 à 5,
**caractérisé en ce que** toutes les connexions électriques (29) de et à l'élément de chauffage (20) sont guidées en faisceau dans un câble plat dans la zone entrefer (30), et sont guidées depuis la cassette chauffable par le biais d'une connexion à fiche (32, 33) pénétrant la paroi de la cassette.

7. Cassette selon la revendication 6,
**caractérisé en ce que** la connexion à fiche pénétrant la paroi de la cassette est produite, en technique de moulage par injection, intégralement avec chacune coque de cassette.

8. Cassette selon la revendication 1,
**caractérisé en ce que** les enfoncements recevants (10) dans les deux coques de cassette (2, 3) comportent un épaulement de support circulant (31) qui projette vers l'intérieur et est décalé en baisse, vers la paroi de coque de cassette dans l'enfoncement recevant (10) au moins par l'épaisseur de la plaque conductrice-chaleur (11) reposant sur ledit épaulement de support (31).

9. Cassette selon la revendication 1 ou 8,
**caractérisé en ce qu'**un scellage en élasticité par caoutchouc (28) entoure la plaque conductrice-chaleur (11) et étanchéifie l'espace recevant-sachets (R) contre l'enfoncement recevant (10).

10. Cassette selon la revendication 1,
**caractérisé en ce qu'**un rouleau de vidange (14) enduit en élasticité par caoutchouc (15) est disposé dans la cassette chauffable,
ledit rouleau de vidange (14) roulant sous l'effet de gravitation sur un sachet qui est déjà partiellement vidé et poussant les restes situés là-dedans en baisse vers le côté de vidange,
la superficie (16) de la coque de cassette (2, 3) balayée par le rouleau de vidange (14) et la plaque conductrice-chaleur (11) recouvrant l'enfoncement recevant (10) étant situées dans le même plan.

11. Cassette selon la revendication 1,
**caractérisé en ce que** la plaque conductrice-chaleur (11) est fournie, sur la surface qui est en état monté tournée vers l'espace recevant de sachets (R), d'un revêtement synthétique (17) résistant à températures hautes et empêchant l'adhérence du sachet de matériau synthétique qui est à chauffer.

12. Cassette selon la revendication 11,
**caractérisé en ce que** le revêtement (17) de la plaque conductrice-chaleur (11) consiste de PTFE.

13. Cassette selon la revendication 1,
**caractérisé en ce que** les deux coques de cassette (2, 3) sont raccordées l'une à l'autre par articulation-charnière (4)
et les enfoncements recevants (10) s'étendent là-dedans à partir de l'extrémité loin de la charnière au-delà de la moitié de la hauteur (H) des coques de cassette (2, 3) vers le haut
et que pour le sachet qui est à chauffer des moyens d'accrochage (7, 9) sont présents sur une coque de cassette (2, 3) dans une proximité de la charnière.
